# EUROPEAN PATENT APPLICATION

(11) **EP 1 939 143 A1**
(43) Date of publication of application: **02.07.2008**
(21) Application number: 06810504.8
(22) Date of filing: 25.09.2006
(51) Int. Cl.: C02F 1/46

(54) **ION CONCENTRATION REGULATION METHOD AND ION CONCENTRATION REGULATION APPARATUS**

(30) Priority: 27.09.2005 JP 2005279977
(71) Applicant: TANAH PROCESS LTD., Osaka-shi, Osaka, 5450035 (JP)
(72) Inventor: TANAHASHI, Masakazu, Osaka-shi, Osaka 5450035 (JP); TANAHASHI, Seiji, Osaka-shi, Osaka 5450035 (JP)
(74) Representative: Hart-Davis, Jason
(86) International application number: PCT/JP2006/318936
(87) International publication number: WO 2007/037193

(57) **Abstract**

In a container 10, a first electrode 11 containing a first electrically conductive material capable of adsorbing an ion and a second electrode 12 containing a second electrically conductive material capable of adsorbing an ion are immersed in a liquid (aqueous solution 13) containing at least one type of ion other than hydrogen ion and hydroxide ion. Then a voltage is applied between the first electrode 11 and the second electrode 12 so that the first electrode 11 serves as an anode. This voltage application allows the first electrode 11 and the second electrode 12 to adsorb anions and cations contained in the aqueous solution 13, respectively. In this ion adsorption step, the aqueous solution 13 is treated by a batch method. The voltage to be applied is higher than a voltage that causes electrolysis of a solvent of the solution, assuming that no voltage drop is caused by the liquid (aqueous solution 13).

## Description

### Technical Field

The present invention relates to an ion concentration control method and an ion concentration control apparatus.

### Background Art

Conventionally, a method in which an ion-exchange resin is used and a method in which a flow-through capacitor is used have been proposed as methods for removing ions contained in an aqueous solution.

When a flow-through capacitor is used, ions are adsorbed by electrodes and thereby the ions are removed. Examples of an apparatus including a flow-through capacitor used therein are described in USP 5,192,432, USP 5,196,115, JP 5(1993)-258992 A, USP 5,415,768, USP 5,620,597, USP 5,748,437, JP 6(1994)-325983 A, and JP 2000-91169 A.

In the flow-through capacitors described above, a liquid to be treated is supplied from an inlet continuously into a capacitor where electrodes are disposed, and the liquid that has been treated is discharged continuously from an outlet. Accordingly, the ion concentration of the liquid to be treated varies from high to low toward the outlet away from the inlet. Furthermore, since ion adsorption of electrodes occurs from the inlet side, the ion adsorption capacity gradually diminishes from the inlet side. Accordingly, when ions are to be removed using a flow-through capacitor, it is difficult to allow the electrodes to fully exhibit their capacity in some cases.

### Disclosure of Invention

With consideration given to the situation as described above, the present invention is intended to provide an ion concentration control method and an ion concentration control apparatus, each of which allows the ion concentration of a solution (liquid) to be controlled efficiently.

In order to achieve the aforementioned object, a method of controlling the ion concentration of the present invention includes (i) a step of applying a voltage between a first ion-adsorbing electrode containing a first electrically conductive material capable of adsorbing an ion and a second ion-adsorbing electrode containing a second electrically conductive material capable of adsorbing an ion so that the first ion-adsorbing electrode serves as an anode, with the first ion-adsorbing electrode and the second ion-adsorbing electrode being immersed in a solution containing at least one type of ion (L) other than hydrogen ion and hydroxide ion, to allow the first ion-adsorbing electrode to adsorb an anion contained in the solution and to allow the second ion-adsorbing electrode to adsorb a cation contained in the solution, in a container. In step (i) described above, the solution is treated by a batch method. The voltage is higher than a voltage at which a solvent of the solution is electrolyzed, assuming that no voltage drop is caused by the solution.

An ion concentration control apparatus of the present invention includes a power supply for applying a voltage, a container capable of introducing and discharging a liquid, and first and second ion-adsorbing electrodes that can be disposed in the container. The first ion-adsorbing electrode contains a first electrically conductive material capable of adsorbing an ion, and the second ion-adsorbing electrode contains a second electrically conductive material capable of adsorbing an ion. This apparatus carries out (i) a step of applying a voltage between the first ion-adsorbing electrode and the second ion-adsorbing electrode so that the first ion-adsorbing electrode serves as an anode, with the first and second ion-adsorbing electrodes being immersed in a solution containing at least one type of ion (L) other than hydrogen ion and hydroxide ion, to allow the first ion-adsorbing electrode to adsorb an anion contained in the solution and to allow the second ion-adsorbing electrode to adsorb a cation contained in the solution, in the container. In step (i) described above, the solution is treated by a batch method. The voltage is higher than a voltage at which a solvent of the solution is electrolyzed, assuming that no voltage drop is caused by the solution.

In the present invention, the use of a counter electrode makes it possible to control the pH of a solution and a liquid that are to be treated. Furthermore, in the present invention, the use of a counter electrode makes it possible to control the amount of ions to be adsorbed by the electrodes, so that a decrease in ion removal rate can be prevented.

According to the present invention, the ion concentration and pH of a liquid can be controlled efficiently using a small apparatus.

### Brief Description of Drawings

FIG. 1A is a diagram that schematically shows an example of a step of the ion concentration control method according to the present invention.
FIG. 1B is a diagram that schematically shows an expected ion adsorption state.
FIG. 2 is a diagram that schematically shows a conventional ion removal method using a flow-through capacitor.
FIG. 3 is a diagram that schematically shows an example of voltage drop in the ion concentration control method of the present invention.
FIG. 4 is a diagram that schematically shows another example of the step of the ion concentration control method according to the present invention.
FIG. 5 is a diagram that schematically shows an example of the ion concentration control apparatus according to the present invention.
FIGs. 6A to 6C are diagrams that schematically show the configuration of an electrode group used in examples.
FIG. 7 is a diagram that schematically shows the configuration of an electrode used in examples.
FIG. 8 is a graph showing the change in applied voltage in an ion adsorption step of an example.
FIG. 9 is a graph showing the relationship between current application time and an electric current in an ion adsorption step of an example.

### Description of the Preferred Embodiments

Hereinafter, embodiments of the present invention are described. In the following description, the embodiments of the present invention are described using examples. However, the present invention is not limited to the examples described below. Moreover, in the description made with reference to drawings, the identical parts may be indicated with identical numerals and symbols and the same description is not repeated in some cases. Furthermore, the drawings used for the following description are schematic drawings.

### [Ion concentration control method (liquid property control method)]

Hereinafter, the method of the present invention for controlling the ion concentration is described. In this method, a solution containing at least one type of ion (L) other than hydrogen ion (H⁺) and hydroxide ion (OH⁻) is placed in a container. Hereinafter, this solution may be referred to as a "solution (A)". The solvent of the solution (A) is water and/or an organic solvent. That is, the solution (A) is an aqueous solution or a nonaqueous solution (a nonaqueous solvent containing ions). The solvent of the aqueous solution is water or a mixed solvent of water and an organic solvent. The solvent of the nonaqueous solution is an organic solvent. Examples of the organic solvent include alcohols such as ethanol, ketones such as acetone, and propylene carbonate, ethylene carbonate, and dimethyl carbonate that are used for electrolytes. Alcohols such as ethanol are used in many fields such as industry and medical treatments. Ketones such as acetone are used for washing of research instruments or polish removers, for example.

A first ion-adsorbing electrode containing a first electrically conductive material capable of adsorbing ions and a second ion-adsorbing electrode containing a second electrically conductive material capable of adsorbing ions are immersed in the solution (A) placed in the container. In this state, a voltage is applied between the first ion-adsorbing electrode and the second ion-adsorbing electrode so that the first ion-adsorbing electrode serves as an anode (that is, the second ion-adsorbing electrode serves as a cathode). This voltage application allows the first ion-adsorbing electrode to adsorb anions contained in the solution (A) and allows the second ion-adsorbing electrode to adsorb cations contained in the solution (A).

The voltage to be applied is higher than a voltage at which the solvent of the solution (A) is electrolyzed when it is assumed that no voltage drop is caused by the solution (A). Hereinafter, the voltage at which the solvent of the solution (A) is electrolyzed, assuming that no voltage drop is caused by the solution (A), may be referred to as a "solvent decomposition voltage". For example, when the solution (A) is an aqueous solution, the voltage to be applied is higher than 2 volts. Even when a higher voltage than the above-mentioned solvent decomposition voltage is applied, the solvent is not electrolyzed if a sufficiently large voltage drop is caused by the resistance of the solution (A).

When a voltage drop caused by an aqueous solution is small, application of a voltage of 2 volts causes water electrolysis. In the method of the present invention, application of a higher voltage than 2 volts allows the first electrically conductive material of the first ion-adsorbing electrode to adsorb anions contained in the aqueous solution and allows the second electrically conductive material of the second ion-adsorbing electrode to adsorb cations contained in the aqueous solution. The voltage to be applied may be higher than 3 volts, 5 volts, or 10 volts, as long as the effect of water electrolysis does not cause any problems. The higher the voltage to be applied, the higher the ion removal rate, as long as the voltage does not cause water electrolysis. The voltage to be applied is, for instance, 500 volts or lower and usually 200 volts or lower.

When the solution (A) is a nonaqueous solution, the voltage to be applied is higher than a voltage that causes electrolysis of the organic solvent of the solution (A) when it is assumed that no voltage drop is caused by the solution (A). However, the voltage to be applied is not higher than a voltage that causes less actual electrolysis of the solvent, and is preferably, for example, not higher than a voltage that does not cause decomposition of the solvent. When the solution (A) has a high resistance, a large voltage drop is caused by the resistance of the solution (A). Accordingly, in this case, the voltage to be applied is a considerably higher voltage than the solvent decomposition voltage employed when it is assumed that the solution (A) has no resistance.

The method of the present invention is suitable as a method of removing ions from a solution with a low ion concentration (for example, a solution with a conductivity of lower than 10 mS/cm). In the method of the present invention, it is possible to remove ions contained in the solution quickly by applying a higher voltage than 2 volts, with electrodes being disposed at a wider interval and a large amount of solution being placed therebetween.

In the above-mentioned ion adsorption step (step (i)), the solution (A) is treated by the batch method. In the treatments carried out in steps other than step (i), a liquid may be treated by the batch method or may be treated continuously by a flow-through method.

In the conventional treatment method employing a flow-through capacitor, a solution is treated continuously. On the other hand, in the method of the present invention, the solution (A) is treated by the batch method in the ion adsorption step (step (i)). In this case, the "batch method" denotes that a liquid inside a container is treated without substantially replacing the liquid inside the container. When the treatment of the aqueous solution (A) is completed, usually the aqueous solution (A) inside the container is discharged and another liquid is introduced into the container. Generally, addition of a solution or discharge of a solution inside the container is not carried out until the treatment is completed. However, as long as the liquid inside the container is not replaced substantially until the treatment is completed, it is considered as a treatment according to the batch method. In other words, even if a trace amount of solution that does not affect the treatment is added or discharged, it is considered as a batch method. For example, even when 20 vol% or less (for example, 10 vol% or less, 5 vol% or less, or 1 vol% or less) of solution inside the container is added and/or discharged during the treatment, it can be considered as a batch method.

The solution (A) contains at least one type of ion (L) other than hydrogen ion (H⁺) and hydroxide ion (OH⁻). When the solution (A) is an aqueous solution, the solution (A) contains at least one type of ion (L) in addition to hydrogen ion and hydroxide ion. The solution (A) is, for example, an aqueous solution containing both of at least one type of cation (L⁺) other than hydrogen ion and at least one type of anion (L⁻) other than hydroxide ion. The cations other than hydrogen ion are not limited. Examples thereof include an alkali metal ion such as a sodium ion and a potassium ion, an alkaline earth metal ion such as a calcium ion and a magnesium ion, a transition metal ion such as an iron ion, and an ammonium ion. Furthermore, the anions other than hydroxide ion are not limited. Examples thereof include an organic ion such as an acetate ion, a chloride ion, a sulfate ion, and a nitrate ion.

Step (i) makes it possible to reduce the concentration of the ions (L) contained in the solution (A). In the initial stage of the ion removal, a lower voltage than the aforementioned "solvent decomposition voltage" may be applied. For instance, when the solution (A) is an aqueous solution, a voltage of 2 volts or lower may be applied in the initial stage.

Hereinafter, the first ion-adsorbing electrode and the second ion-adsorbing electrode also may be referred to as a "first electrode" and a "second electrode", respectively. When a voltage is applied between the first electrode and the second electrode so that the first electrode serves as an anode (that is, the second electrode serves as a cathode), positive electric charges are accumulated on the surface of the first electrically conductive material of the first electrode, and negative electric charges are accumulated on the surface of the second electrically conductive material of the second electrode. As a result, the first electrically conductive material of the first electrode adsorbs anions (L⁻), and the second electrically conductive material of the second electrode adsorbs cations (L⁺).

Preferably, the voltage to be applied between the first electrode and the second electrode is changed according to the concentration of the ions (L) contained in the solution (A). Application of a voltage in a range where the solvent (water and/or organic solvent) of the solution (A) is not electrolyzed allows ions to be removed efficiently. The lower the concentration of the ions (L) contained in the solution (A), the larger the voltage drop caused by the solution (A). Accordingly, the solvent is not electrolyzed even when a high voltage is applied. Therefore the voltage to be applied between the first electrode and the second electrode may be increased as the ions are removed gradually. When a voltage is applied between the first electrode and the second electrode so that a constant current flows between the electrodes, the voltage to be applied between the first electrode and the second electrode increases with a decrease in concentration of the ions (L) contained in the solution (A). In this case, it is preferable that the current value be set in the range where the solvent is not electrolyzed at the first and second electrodes. However, voltage application may be carried out until gas is generated at the first electrode and/or the second electrode, and the generation of the gas may be taken as a criterion for stopping the voltage application.

The shapes of the first and second electrodes are not limited. They may be plate-like electrodes. It is difficult to treat the ions contained in the solution (A) placed in a region other than the region between the first electrode and the second electrode. Accordingly, it is preferable that most of the solution (A) be placed between the first electrode and the second electrode. For instance, the solution (A) to be placed between a plane including the sheet-like first electrode and a plane including the sheet-like second electrode is preferably at least 70 vol% thereof and more preferably at least 90 vol% thereof.

Preferably, the amount of the solution (A) to be placed between the first electrode and the second electrode in one batch treatment is determined according to the relationship between the amount of the ions (L) contained in the solution (A) and the amount of the ions that can be adsorbed by the electrodes. Specifically, it is preferable that the amount of the solution (A) to be placed between the electrodes be controlled so that the sum total of the amount of ions that can be adsorbed by the first electrode and the amount of ions that can be adsorbed by the second electrode is at least 0.3 times the amount of the ions (L) contained in the solution (A). When the above-mentioned sum total is at least 0.3 times the amount of the ions (L), the concentration of the ions (L) contained in the solution (A) can be reduced to one fifth or lower by treating the solution (A) five times. Furthermore, when the above-mentioned sum total is at least equal to the amount of the ions (L), most of the ions can be removed by a single treatment theoretically. The amount of the solution (A) to be placed between the electrodes can be changed by varying the distance between the electrodes.

The first and second electrically conductive materials are materials that can adsorb ions reversibly. The first and second electrically conductive materials to be used herein can be materials with large specific surface areas. For instance, porous materials may be used for the first and second electrically conductive materials. More specifically, materials that are used for electrodes of flow-through capacitors may be used as the first and second electrically conductive materials. Typical examples of the first and second electrically conductive materials include porous carbon materials. Among the carbon materials, activated carbon is used suitably since it has a larger specific surface area. For instance, the first and second electrically conductive materials may be electrically conductive sheets formed by aggregating granular activated carbon. Furthermore, the first and second electrically conductive materials may be electrically conductive sheets formed by aggregating granular activated carbon and electrically conductive carbon. The first and second electrically conductive materials also may be activated carbon blocks formed by compacting activated carbon particles. Moreover, the first and second electrically conductive materials each may be activated carbon fiber cloth, i.e. a cloth formed using activated carbon fibers. The activated carbon fiber clothes that may be used herein are, for example, ACC5092-10, ACC5092-15, ACC5092-20, and ACC-5092-25 manufactured by Nippon Kynol Inc.

Preferably, the first and second electrodes (ion-adsorbing electrodes) have configurations that allow ions to pass easily through the electrodes. The use of such electrodes can prevent the ion concentration from being uneven in the solution. For example, when granular activated carbon is to be used as the electrically conductive material, it is preferable that an electrode be formed by applying granular activated carbon to a porous collector or a collector with through holes formed therein, such as punched metal. Furthermore, it is particularly preferable that activated carbon fiber cloths be used for the electrodes.

When the solution (A) is an aqueous solution, step (a) may be included after step (i). In step (a), a voltage is applied between a counter electrode and either one selected from the first and second electrodes that are immersed in the solution (A), so that the pH of the solution (A) is controlled. When the ion removal treatment is carried out, the pH of the solution (A) may change. However, the pH can be controlled in step (a).

A counter electrode is placed, for example, between the first electrode and the second electrode. In the method of the present invention, the distance between the first electrode and the second electrode can be increased as compared to the case of a flow-through capacitor. Accordingly, it is possible to place a counter electrode between them. Preferably, the counter electrode has a shape that hinders ions present between the first electrode and the second electrode from passing therethrough as little as possible. The counter electrode may be a porous electrode, a net electrode, or a plate-like electrode with a plurality of through holes formed therein. These counter electrodes are preferable because ions can pass through the counter electrodes. Preferably, the counter electrode is an insoluble electrode. An example of the counter electrode is an electrode whose surface has been coated with a metal (for instance, Pt) that facilitates water electrolysis, for example, a Pt electrode or an electrode formed of Ti coated with Pt.

The counter electrode may have an actual surface area (the surface area measured by, for example, the BET method) that is not more than ten times (for example, not more than five times) the apparent surface area (the surface area of the outer shape) thereof. Examples of such a counter electrode include a common metallic electrode.

Step (a) is carried out by immersing the counter electrode in the solution (A) and applying a voltage between the counter electrode and the first electrode or the second electrode. When the pH of the solution is to be lowered, a voltage is applied between the first electrode and the counter electrode so that the first electrode serves as a cathode and the counter electrode serves as an anode. This allows the first electrode to release the anions adsorbed by the first electrode or allows the first electrode to adsorb cations. On the other hand, hydrogen ion and oxygen gas are generated at the counter electrode due to water electrolysis. As a result, the pH of the solution decreases.

When the pH of the aqueous solution is to be increased, a voltage is applied between the second electrode and the counter electrode so that the second electrode serves as an anode and the counter electrode serves as a cathode. This allows the second electrode to release the cations that had been adsorbed by the second electrode or allows the second electrically conductive material to adsorb anions. On the other hand, hydroxide ion and hydrogen gas are generated due to water electrolysis at the counter electrode. As a result, the pH of the solution increases.

In the method of the present invention, the following ion release step (ii) may be carried out after step (i). In step (ii), first, the solution (A) contained in the container is replaced by another liquid (hereinafter also referred to as a "liquid (B)"). Next, a voltage is applied between the first electrode and the second electrode so that the first electrode serves as a cathode (that is, so that the second electrode serves as an anode). This voltage application allows the anions adsorbed by the first electrode and the cations adsorbed by the second electrode to be released into the liquid (B). The voltage to be applied in step (ii) is not particularly limited. It is, for example, a voltage that actually does not cause the solvent of the liquid (B) to be electrolyzed.

The liquid (B) may be an aqueous liquid or a nonaqueous liquid. The aqueous liquid is water or an aqueous solution. The nonaqueous liquid is an organic solvent or a nonaqueous solution (a nonaqueous solvent containing ions). When the solution (A) is an aqueous solution, generally an aqueous liquid is used for the liquid (B). Furthermore, when the solution (A) is a nonaqueous solution, generally a nonaqueous liquid is used for the liquid (B).

The liquid (B) is a different liquid from the solution (A) but may contain a part of the solution (A). Generally, after the solution (A) subjected to step (i) is discharged from the container, another liquid (B) is introduced into the container, so that the solution inside the container is replaced. Step (ii) can increase the concentration of ions (L) contained in the liquid (B).

It also is possible to release the ions, which have been adsorbed, into the liquid (B) by a method other than step (ii). For example, the first electrode and the second electrode may be short-circuited without applying a voltage therebetween, so that the anions and cations adsorbed by the electrodes are released. When the liquid (B) is an aqueous liquid, the counter electrode may be placed in the liquid (B) and a voltage may be applied between the first electrode and the counter electrode so that the first electrode serves as a cathode, and thereby the anions adsorbed by the first electrode are released into the liquid (B). Furthermore, a counter electrode may be placed in the liquid (B) and a voltage may be applied between the second electrode and the counter electrode so that the second electrode serves as an anode, and thereby the cations adsorbed by the second electrode are released into the liquid (B).

When the liquid (B) is an aqueous liquid, step (a') may be included after step (ii). In step (a'), a voltage is applied between a counter electrode and either one selected from the first and second electrodes that are immersed in the liquid (B), so that the pH of the liquid (B) is controlled. This step (a') is identical to step (a) described above.

When the liquid (B) is an aqueous liquid, step (b) may be included after step (ii). In step (b), a voltage is applied between a counter electrode and at least one selected from the first and second electrodes that are immersed in the liquid (B), so that the ratio between the amount of electric charges of the anions adsorbed by the first electrode and that of the cations adsorbed by the second electrode is controlled. When a voltage is to be applied between the counter electrode and the first and second electrodes, a voltage can be applied, with the first electrode and the second electrode being short-circuited.

In the method of the present invention, the relationship between the voltage applied between the first electrode and the second electrode and the voltage applied between the first and/or second electrode and a reference electrode may be obtained beforehand by a measurement in an initial state. When the above-mentioned relationship deviates from the obtained relationship while the treatment is repeated, it can be judged that the amount of electric charges of the anions adsorbed by the first electrode and that of the cations adsorbed by the second electrode are not in balance.

In this case, the ratio between the amount of electric charges of the anions adsorbed by the first electrode and that of the cations adsorbed by the second electrode is calculated based on the voltage applied between the first and second electrodes as well as the difference in electric potential between the reference electrode and at least one electrode selected from the first and second electrodes. Based on the calculation result, the balance between the amounts of electric charges described above is controlled. A common reference electrode, for example a hydrogen electrode, can be used for the reference electrode.

In the method of the present invention, the liquid (B) subjected to the ion release step (step (ii)) is replaced by another solution, and thereafter the ion adsorption step (step (i)) may be carried out again. Thus, in the method of the present invention, step (i) and step (ii) may be repeated a plurality of times. The ion adsorption step and the ion release step are repeated while the solution inside the container is replaced, so that a solution with a high concentration of ions (L) and a solution with a low concentration of ions (L) can be obtained. That is, the method of the present invention can be used as a method for increasing the ion concentration of a liquid and/or a method for decreasing the ion concentration of a liquid.

When the ion adsorption step and the ion release step have been carried out, particularly when the ion adsorption step and the ion release step have been repeated alternately, the amount of electric charges of the anions adsorbed by the first electrode and that of the cations adsorbed by the second electrode are occasionally not in balance. In such a case, a voltage is applied between the counter electrode and either one of the first and second electrodes to allow the ions adsorbed by one electrode to be released, and thereby the balance in the amounts of electric charges can be controlled.

When the solution (A) is an aqueous solution, the method of the present invention may include a step of applying a voltage between the first electrode and the second electrode until oxygen gas is generated from the first electrode and hydrogen gas is generated from the second electrode, in at least one of steps (i) that are carried out repeatedly. This configuration makes it possible to restore the imbalance in the amount of electric charges that is caused by repeating treatments.

The method of the present invention may include the following step after at least one of steps (ii) that are carried out repeatedly. That is, in the step, with the first electrode and the second electrode being short-circuited, a voltage is applied between the counter electrode and the first and second electrodes so that the anions adsorbed by the first electrode and the cations adsorbed by the second electrode are released. This method makes it possible to restore the imbalance in the amount of adsorbed ions that is caused by repeating treatments.

In the method of the present invention, it is preferable that in the initial state, i.e. in the stage where the treatment is carried out for the first time, the amount of electric charges of the anions that are adsorbed by the first electrode before oxygen gas is generated at the first electrode be approximately equal to that of the cations that are adsorbed by the second electrode before hydrogen gas is generated at the second electrode. Specifically, it is preferable that the amount of electric charges of the anions adsorbed by the first electrode before oxygen gas is generated be in the range of 0.9 to 1.1 times the amount of electric charges of the cations adsorbed by the second electrode before hydrogen gas is generated.

In the method of the present invention, the amount of electric charges of the anions that can be adsorbed by the first electrically conductive material may be in the range of 1.1 to 2 times the amount of electric charges of the cations that can be adsorbed by the second electrically conductive material. This configuration allows the first electrode and the second electrode to adsorb ions in a balanced manner. For example, when the first electrically conductive material and the second electrically conductive material are materials with the same specific surface areas (when they both have the same ion adsorption capacities), the weight of the first electrically conductive material contained in the first electrode may be set in the range of 1.1 to 2 times (preferably, in the range of 1.2 to 1.5 times) the weight of the second electrically conductive material contained in the second electrode. The amount of electric charges of the ions that can be adsorbed by the electrically conductive materials can be determined by measuring the amount of ions that are adsorbed when ions are allowed to be adsorbed, in the electric potential range within the water decomposition voltage, until a saturated state is achieved in a high concentration ion solution as indicated in Example 7. Specifically, a method is applicable in which the amount of adsorbed ions is measured with a low voltage-rise-rate that allows even a high-resistance portion of the electrode to adsorb ions satisfactorily in a cyclic voltammetry.

The first and second electrically conductive materials each may have a specific surface area of 900 m²/g or more. The upper limit of the specific surface is not particularly limited, but it may be, for example, 2500 m²/g or smaller. It also is possible to use an electrically conductive material with a smaller specific surface area. For instance, it also is possible to use an electrically conductive material with a specific surface area of 300 m²/g or larger. In this specification, the term "specific surface area" denotes a value measured by the BET method using nitrogen.

As described above, the first and second electrically conductive materials may contain activated carbon. The first electrode may include a first wiring that is in contact with the first electrically conductive material. The second electrode may include a second wiring that is in contact with the second electrically conductive material.

When the first and second electrically conductive materials contain activated carbon, the electrically conductive materials each have a relatively high resistance. Accordingly, the voltage to be applied to the solution may become uneven due to the resistance of the electrically conductive materials. In such a case, it is preferable that the effect of the voltage drop caused by the electrically conductive materials be controlled using the wirings. Preferably, the wirings are formed so that the voltage drop caused by the electrically conductive materials is smaller than the voltage drop caused by the solution.

When the first and second electrically conductive materials contain activated carbon and the first and second electrodes include wirings, it is preferable that a metal with a lower oxygen overvoltage than that of the activated carbon be present at the surface of the first wiring and a metal with a lower hydrogen overvoltage than that of the activated carbon be present at the surface of the second wiring. In the method of the present invention, for example, electrodes may be initialized by water electrolysis. However, even in that case, since the use of the above-mentioned wirings allows gas to be generated at the surfaces of the wirings, hydrogen gas and oxygen gas can be prevented from being generated at the surface of activated carbon. Furthermore, it is preferable that the wirings tend not to be dissolved during the liquid treatment. An example of the metal with a lower hydrogen overvoltage and a lower oxygen overvoltage than those of activated carbon, i.e. the metal that tends to generate gas more easily as compared to activated carbon, is platinum (Pt).

In the method of the present invention, platinum may be present at the surfaces of the first and second wirings. An example of the wirings is a wiring coated with platinum, and, for instance, wirings can be used that are obtained by coating titanium or a valve metal (for example, aluminum, tantalum, and niobium) used in an electrolytic capacitor, with platinum. Particularly preferred example is a wiring formed of titanium coated with platinum.

In the method of the present invention, a voltage to be applied between the first electrode and the second electrode may be controlled, in step (i), according to the resistance value obtained between the first electrode and the second electrode. The resistance of the solution (or voltage drop caused by the solution) varies according to the concentration of the ions contained in the solution. Accordingly, the treatment can be carried out efficiently by changing the voltage to be applied or stopping the voltage application according to the resistance of the solution (or voltage drop caused by the solution).

In the method of the present invention, the voltage to be applied between the first electrode and the second electrode may be controlled, in step (i), according to the value of current that has flowed between the first electrode and the second electrode. It is possible to estimate the amount of electric charges of the ions adsorbed by the ion-adsorbing electrodes according to the value of current that has flowed between the electrodes. Accordingly, the treatment can be carried out efficiently by estimating the amount of electric charges of the ions adsorbed by the electrodes from the electrical quantity that has flowed between the electrodes, and changing the voltage to be applied or stopping the voltage application according to the estimated value.

In the method of the present invention, a plurality of first electrodes and a plurality of second electrodes may be used in step (i). The use of a plurality of electrodes can improve the ion concentration control capability. Moreover, a single electrode may be employed for either the first electrode or the second electrode and a plurality of electrodes may be employed for the other. Furthermore, in the step where a counter electrode is used, a plurality of counter electrodes may be used.

In the method of the present invention, a voltage may be applied in step (i) so that the value of current that flows between the first electrode and the second electrode decreases gradually. In this case, the expression "decreases gradually" embraces both a continuous decrease and a stepwise decrease.

From a further viewpoint, the present invention relates to a method of sterilizing an aqueous solution using the above-mentioned method. That is, in step (i) described above, the electric potential of the aqueous solution is increased to an electric potential of oxygen evolution or higher. At this time, oxygen of an active group that is generated on the electrodes has the capability to fully oxidize bacteria and thereby the aqueous solution can be sterilized.

### [Ion concentration control apparatus (liquid property control apparatus)]

The ion concentration control apparatus of the present invention is an apparatus for carrying out the ion concentration control method of the present invention described above. Therefore the description made in the explanation of the ion concentration control method described above may not be repeated.

The ion concentration control apparatus of the present invention includes a power supply for applying a voltage, a container capable of introducing and discharging liquid, and first and second electrodes (ion-adsorbing electrodes) that can be disposed in the container. The first electrode contains a first electrically conductive material capable of adsorbing ions, and the second electrode contains a second electrically conductive material capable of adsorbing ions. In this apparatus, the aforementioned ion adsorption step (step (i)) is carried out. In step (i), the solution (A) is treated by the batch method. The voltage to be applied in step (i) is higher than a voltage at which the solvent of the solution (A) is electrolyzed, assuming that no voltage drop is caused by the solution (A).

The ion concentration control apparatus of the present invention carries out the ion concentration control method of the present invention described above. Specifically, in this apparatus, step (i) described above is carried out. Furthermore, in this apparatus, another step, for example, the aforementioned other steps may be carried out in addition to step (i).

The apparatus of the present invention further may include a counter electrode that can be disposed in the container. Preferably, this counter electrode is an insoluble electrode because it is used for generating oxygen gas and/or hydrogen gas. In the apparatus including the counter electrode, a step of applying a voltage between the first and/or second electrode(s) and a counter electrode described above may be carried out. For instance, step (ii), step (a), or step (a') may be carried out.

The power supply is used for applying a voltage between the first electrode and the second electrode, and between the counter electrode and at least one electrode selected from the first and second electrodes. The power supply is usually a DC power supply. However, it may be a pulse power supply or an AC power supply, as long as the effects of the present invention can be obtained. In order to control the ion concentration, the power supply may be used in combination with a timer, a coulombmeter, or a pH meter. For example, a constant-current power supply and a timer may be used in combination, or a constant-current power supply or a constant-voltage power supply and a coulombmeter and/or a pH meter may be used in combination.

According to the ion concentration control apparatus of the present invention, the ion concentration control method of the present invention can be carried out easily. Since the ion-adsorbing electrodes, electrically conductive materials, and counter electrodes already have been described above, the same descriptions are not repeated.

The container is not particularly limited. It can be any container as long as it can hold a liquid to be treated. For example, when the liquid to be treated is an aqueous solution, the container may be any container as long as it can hold an aqueous solution of salt, an acid aqueous solution, and an alkaline aqueous solution. Preferably, this container is provided with a mechanism for facilitating the replacement of a liquid inside the container. For example, it is preferable that this container be provided with an inlet for allowing a liquid to flow into the container and an outlet for discharging the liquid inside the container. The use of a container provided with an inlet and an outlet makes it possible to treat a liquid continuously. Furthermore, when the inlet and the outlet each are provided with a valve, a batch treatment of liquid is facilitated.

The apparatus of the present invention may be provided with a pump for introducing and discharging a liquid.

Like known pH control apparatuses or ion concentration control apparatuses, it is preferable that the apparatus of the present invention be provided with a controller for carrying out each step. For such a controller, a substantially same controller as a known controller that includes an arithmetic processing unit and a memory unit can be used. In the memory unit, for example, a program for carrying out each step and a target value of the ion concentration (or conductivity of the liquid) are recorded. This controller may control the voltage to be applied to the electrodes based on, for example, the target value of the ion concentration (and an input value from each sensor as required).

In the method and apparatus of the present invention, the amount of the liquid to be subjected to a batch treatment is not particularly limited. In one example, the amount may be in the range of 0.1 milliliter to 10 milliliter per 1 cm² of the apparent surface area (the surface area determined from the size of the contour) of the first or second electrically conductive material.

### [Embodiment 1]

Hereinafter, examples of the ion concentration control method and apparatus of the present invention are described with reference to the drawings. In the following, examples are described in which the solution (A) is an aqueous solution and the liquid (B) is water. However, the same method and apparatus can be used even when a nonaqueous liquid is used as the solution (A) and/or the liquid (B).

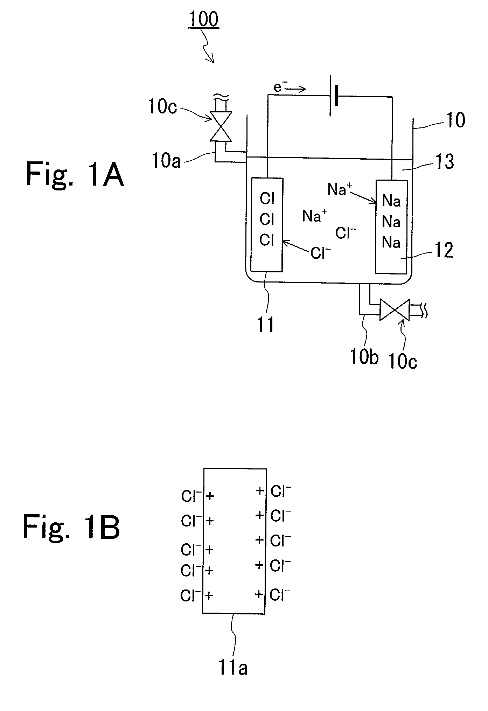

FIG. 1A schematically shows the main part of an ion concentration control apparatus 100 that is used in the ion concentration control method of Embodiment 1. The ion concentration control apparatus 100 includes a container 10 as well as a first electrode (first ion-adsorbing electrode) 11 and a second electrode (second ion-adsorbing electrode) 12 that are disposed in the container 10. An inlet 10a for introducing a liquid and an outlet 10b for discharging a liquid are connected to the container 10. The inlet 10a and the outlet 10b each are provided with a valve 10c.

In the ion concentration control method of the present invention, as shown in FIG. 1A, the first electrode 11 and the second electrode 12 are immersed in an aqueous solution 13 in the container 10, and a voltage is applied between the electrodes. In this operation, a voltage is applied between the electrodes so that the first electrode 11 serves as an anode and the second electrode 12 serves as a cathode. The voltage to be applied is higher than 2 volts.

The following description is directed to the case where the aqueous solution 13 is a sodium chloride aqueous solution and the electrically conductive material that adsorbs ions is an activated carbon fiber cloth. However, even when using an aqueous solution containing another salt dissolved therein or using another ion adsorption material, the treatment can be carried out in the same manner.

The voltage to be applied between the first electrode 11 and the second electrode 12 may be constant or may be varied according to the progress of the treatment. For example, the voltage may be applied so that a constant electric current flows between the first electrode 11 and the second electrode 12. In this case, a voltage rise has a correlation with a change in IR drop between the electrodes. Accordingly, the amount of electric charges of the ions adsorbed by the electrodes can be estimated from the voltage rise. The voltage rise can be determined more precisely by measuring the voltage while the electric current to be applied is changed, and deducting the voltage resulting from the IR drop from the difference in electric potential between the electrodes

With the voltage application, chlorine ions are adsorbed by the activated carbon fiber cloth (omitted in the drawing) of the first electrode 11 and sodium ions are adsorbed by the activated carbon fiber cloth (omitted in the drawing) of the second electrode 12. As a result, the sodium chloride concentration of the aqueous solution 13 decreases.

The aqueous solution 13 inside the container 10 is treated by the batch method. That is, the aqueous solution 13 is not moved out of the container until the treatment is completed. This method makes it possible to remove ions efficiently as compared to the conventional treatment that is carried out using a flow-through capacitor. The reason is described below.

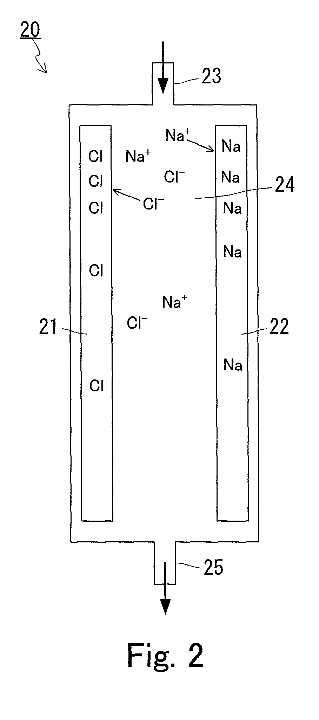

FIG. 2 shows the manner of a conventional treatment carried out using a flow-through capacitor. First and second electrodes 21 and 22 for adsorbing ions are disposed in the flow-through capacitor 20. An aqueous solution 24 is introduced continuously into the capacitor 20 through an inlet 23 and then is treated. The aqueous solution 24 thus treated is discharged continuously through an outlet 25. Since ions contained in the aqueous solution 24 are removed while it passes through the capacitor 20 where the ion removal treatment is being performed, the ion concentration thereof in the vicinity of the inlet 23 is higher than that in the vicinity of the outlet 25.

When a voltage is applied between the first electrode 21 and the second electrode 22, a voltage drop occurs due to the resistance of the aqueous solution 24. This voltage drop increases with a decrease in ion concentration of the aqueous solution 24. Accordingly, the voltage drop caused by the aqueous solution 24 increases toward the outlet 25. Therefore even when a voltage (for example, 2V or lower) that does not cause electrolysis of water contained in the aqueous solution 24 is applied, only a part thereof is used for ion removal in the vicinity of the outlet 25, which results in a deterioration in the capability of removing ions in the vicinity of the outlet 25. On the other hand, the aqueous solution 24 present in the vicinity of the outlet 25 is subjected to ion removal to have a lowered conductivity. Accordingly, in order to apply a sufficient voltage to that part of the aqueous solution 24, the voltage needs to be applied with consideration given to the voltage drop caused by the aqueous solution 24. Application of such a voltage results in application of a high voltage to the aqueous solution 24 present in the vicinity of the inlet 23. As a result, water is electrolyzed in the vicinity of the inlet 23. Therefore, in the conventional method using a flow-through capacitor, the voltage to be applied between electrodes was one that substantially does not cause electrolysis of water (2V or lower, with consideration given to an overvoltage). Accordingly, the conventional method does not allow the whole electrode to be used uniformly for removing ions.

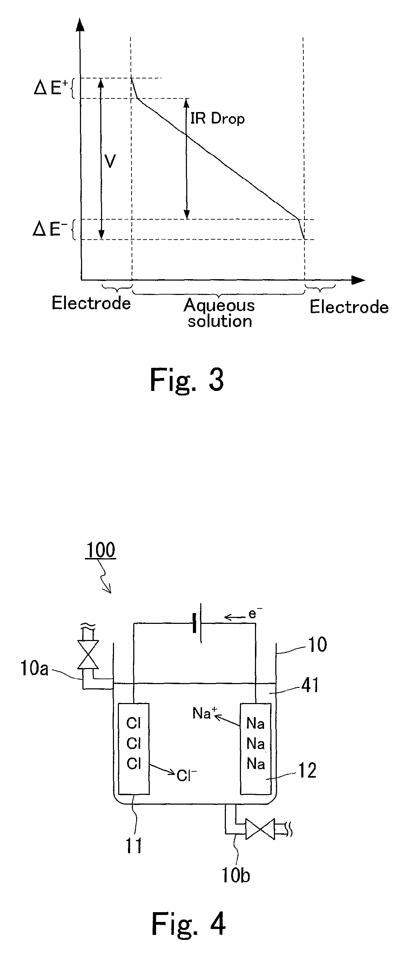

On the other hand, in the method of the present invention, the voltage drop caused by the aqueous solution 13 contained in the container 10 is substantially uniform throughout the electrodes. Therefore, the application of a voltage with consideration given to the voltage drop caused by the aqueous solution 13 allows a voltage suitable for ion removal to be applied to the whole aqueous solution 13. This makes it possible to remove ions efficiently using the whole electrically conductive materials of the electrodes. FIG. 3 schematically shows the state of the voltage to be applied to the aqueous solution 13 in the apparatus 100 shown in FIG. 1A. Even when the voltage V to be applied between the first electrode 11 and the second electrode 12 exceeds 2 volts, the electrolysis of the aqueous solution 13 can be prevented, as long as a value [ΔE⁺+ΔE⁻] obtained by deducting the voltage drop IR from the voltage V is equal to or lower than the water decomposition voltage.

After completion of a treatment for decreasing the concentration of sodium chloride contained in the aqueous solution 13, the aqueous solution 13 is discharged from the container 10 and water is then placed in the container 10 instead. Although the details are not clear, presumably, as shown in FIG. 1B, the anions adsorbed by the activated carbon fiber cloth 11a of the first electrode 11 are attracted by the positive electric charges present at the surface of the activated carbon fiber cloth 11a by the coulomb force. Similarly, it is presumed that the cations adsorbed by the activated carbon fiber cloth of the second electrode 12 are attracted by the negative electric charges present at the surface of the activated carbon fiber cloth by the coulomb force. Conceivably, the adsorbed ions therefore remain adsorbed by the cloth relatively stably as long as the surface charges of the activated carbon fiber cloth are present.

Next, a voltage is applied between the first electrode 11 and the second electrode 12 so that the first electrode 11 serves as a cathode and the second electrode 12 serves as an anode. With this voltage application, the anions adsorbed by the electrically conductive material of the first electrode 11 and the cations adsorbed by the electrically conductive material of the second electrode 12 are released into water. As a result, the water inside the container 10 becomes a sodium chloride aqueous solution 41 as shown in FIG. 4.

After completion of the ion release step, the sodium chloride aqueous solution contained in the container 10 is discharged, and then another aqueous solution 13 with ions that have not been removed is introduced into the container 10. Thereafter, the treatment described with reference to FIG. 1A is carried out to remove sodium chloride contained in the aqueous solution 13. Subsequently, a sodium chloride aqueous solution 41 is introduced into the container 10 again, and then the sodium ions and chlorine ions that have been adsorbed by the electrodes are released. With repetition of this treatment, a large amount of aqueous solution in which sodium chloride has been removed and a sodium chloride aqueous solution having a high concentration of sodium chloride are obtained. When either one of the aqueous solution with a high ion concentration or the aqueous solution with a low ion concentration is not necessary, the unnecessary aqueous solution may be discharged every time the treatment is completed. Furthermore, the ion removal treatment may be carried out repeatedly with respect to the aqueous solution that has been subjected to the ion removal treatment.

When the same treatment is repeated with respect to the same aqueous solution (A) or aqueous liquid (B), the apparatus of the present invention may be provided with at least one other container for allowing such a liquid to be transferred from the container 10 temporarily. In this case, the apparatus of the present invention may be provided with a pump for transferring the liquid from one container to the other.

According to the method of the present invention described above, the ion concentration can be controlled efficiently as compared to the case of using the flow-through capacitor. JP 2000-91169 A discloses that a NaCl aqueous solution with a concentration of 0.01 mol/liter was treated at a flow rate of 0.1 liter/min for about five minutes (about 0.5 liter) with a flow-through capacitor in which 400 g of activated carbon whose specific surface area was 2200 m²/g was used, and thereby the NaCl concentration was decreased to lower than 0.002 mol/liter. On the other hand, in the method of the present invention, 30 ml of NaCl aqueous solution with a concentration of 0.01 mol/liter was treated for 15 minutes using 0.34 g of activated carbon whose specific surface area was about 2000 m²/g, and thereby the concentration was decreased to 0.0018 mol/liter (see Example). Thus, as compared with the conventional method in which a flow-through capacitor is used, the amount of ions to be removed per unit weight of the activated carbon was increased at least 70 times (400/(0.34 × 0.5/0.03) ≥ 70) according to the method of the present invention.

In order to make the time required for the treatment of the aqueous solution equal to that required in the apparatus described in JP 2000-91169 A, it is only necessary to triple the amount of the activated carbon fiber cloth. In this case, the amount of the activated carbon to be used is 17 g (0.34 × (0.5/0.03) × 15/5) and is about 1/23 the amount used in the apparatus described in JP 20000-91169 A.

Furthermore, the method of the present invention can be carried out with a simple apparatus and makes it possible simply and inexpensively to carry out treatments such as demineralization of hard water, production of pure water, and removal of chlorine gas (removal of chlorine gas that has been dissolved in a liquid, by ionization thereof). Therefore the apparatus used for carrying out the method of the present invention is suitable as a home appliance. The method and apparatus of the present invention make it possible to produce ionized alkaline water and acid water, with the ion concentration being reduced. Furthermore, since the electric potential of the cathode is close to that at which water is electrolyzed, chlorine gas can be decomposed into chlorine ions.

The principle of adsorption of ions contained in an aqueous solution is the same as that employed in the electric double layer capacitor. Assume the case where the first electrode and the second electrode are identical to each other, that is, the case where the first electrically conductive material and the second electrically conductive material are identical to each other in quality and amount. In this case, the charge amount of the anions adsorbed by the first electrode before oxygen gas is generated at the first electrode to serve as an anode is less than that of the cations adsorbed by the second electrode before hydrogen gas is generated at the second electrode to serve as a cathode (see Example 7). Therefore, when the first electrically conductive material of the first electrode and the second electrically conductive material of the second electrode are identical to each other in quality and amount, the electric potential of the first electrode (anode) reaches the electric potential at which water is decomposed first. In order to prevent the generation of gas at one electrode alone, it is preferable that the amount of charges that are accumulated in the first electrode until oxygen gas is generated on the first electrode side be equal to the amount of charges that are accumulated in the second electrode until hydrogen gas is generated on the second electrode side.

As a result of the experiments made by the inventors, it was proved that when measurement was carried out with the electrodes composed only of activated carbon, the preferable range of [weight of activated carbon of first electrode] : [weight of activated carbon of second electrode] was 1.1 : 1 to 2 : 1.

In the case of removing ions contained in the aqueous solution, it is possible to increase the treatment speed by applying a voltage so as to provide a constant electric current that flows between the first electrode and the second electrode. When a voltage is applied by such a constant current method, the electric current density set to excessively high results in an excessively high voltage to be applied between the electrodes and thereby water electrolysis may be caused to generate gas. When gas is generated, voltage application may be stopped for a certain period of time before being restarted. Stopping of the voltage application transfers ions adsorbed by the activated carbon to cancel the imbalance in the ions, which lowers the voltage to be applied between the electrodes when the voltage application is restarted.

When a voltage higher than 2 V but not higher than 5 V is applied between the first electrode and the second electrode, the speed at which ions contained in the aqueous solution are removed is not so high, but the generation of gas is prevented and thereby the electric current can be used more efficiently.

When ions adsorbed by the electrically conductive materials are allowed to be released, the first electrode and the second electrode may be short-circuited or a voltage may be applied between the first electrode and the second electrode so that the first electrode serves as a cathode and the second electrode serves as an anode. Furthermore, when the liquid (B) is an aqueous liquid, a voltage may be applied between the first or second electrode and a counter electrode to release ions in the liquid (B).

When the ion adsorption step or the ion release step has been carried out, electrolysis of impurities or control of pH of the aqueous solution may result in a difference in charge amount between the anions adsorbed by the first electrode and the cations adsorbed by the second electrode. In such a case, it is preferable that the difference be cancelled using the counter electrode.

For example, when the dissolved oxygen contained in the aqueous solution consumes electrons of the cathode (second electrode) to become hydroxide ion, extra anions whose amount corresponds to the charge amount of the electrons thus consumed are adsorbed by the anode (first electrode). As a result, the charge amount of the anions adsorbed by the first electrode is larger than that of the cations adsorbed by the second electrode.

When the ion release step is carried out in such a state, anions remain adsorbed by the first electrode even when all cations are released from the second electrode. When voltage application for ion release further is continued to release anions adsorbed by the first electrode, positive electric charges are accumulated on the surface of the second electrode and anions are adsorbed thereby. This results in a state where anions are adsorbed by both the first electrode and the second electrode. When the ion adsorption step is started in such a state, anions are released from the second electrode and anions are adsorbed by the first electrode continuously. This state is maintained until all the anions adsorbed by the second electrode are released, and thereby the ion concentration does not change. Thus when an imbalance is caused between the charge amount of the anions adsorbed by the first electrode and that of the cations adsorbed by the second electrode, the efficiency is degraded.

Therefore, when such an imbalance in ions has been caused, it is preferable that an operation to release all the ions adsorbed by the electrodes (hereinafter also referred to as "initialization of electrodes") be performed.

For example, when excess anions have been adsorbed by the first electrode, a voltage is applied, with the first electrode and the second electrode being short-circuited, so that these two electrodes serve as cathodes and the counter electrode serves as an anode. With this voltage application, excess anions that have been adsorbed by the electrodes can be released, which can result in the state where no ions are being adsorbed by the electrodes. On the other hand, when excess cations have been adsorbed by the second electrode, a voltage is applied, with the first electrode and the second electrode being short-circuited, so that these two electrodes serve as anodes and the counter electrode serves as a cathode. The initialization of electrodes thus carried out can prevent the efficiency from degrading.

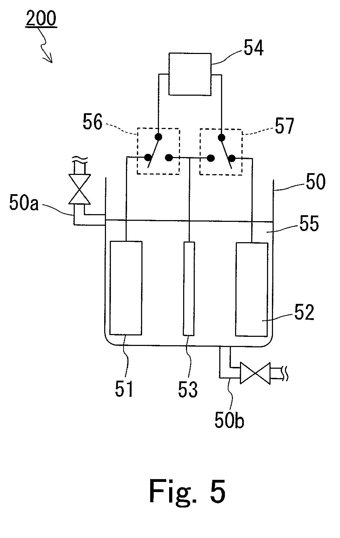

FIG. 5 shows an example of the ion concentration control apparatus with a counter electrode. The ion concentration control apparatus 200 shown in FIG. 5 is provided with a container 50, a first electrode 51, a second electrode 52, a counter electrode 53, and a power supply 54. An inlet 50a for introducing a liquid and an outlet 50b for discharging a liquid are connected to the container 50. The first electrode 51 and the second electrode 52 are ion-adsorbing electrodes. As shown in FIG. 5, generally, these electrodes are immersed in a liquid 55 to be treated. However, any electrodes that are not required for the treatment may be removed from the container 50.

Although FIG. 5 shows the case where the power supply 54 is connected to the first electrode 51 and the second electrode 52, the apparatus 200 is configured so that the power supply 54 can be connected to any electrode. Therefore the apparatus 200 is provided with switches 56 and 57. The power supply and the switches are controlled by a controller (not shown). The apparatus of the present invention further may include a wiring and a switch for short-circuiting the first electrode and the second electrode.

### [Examples]

Hereinafter, the present invention is described in further detail using examples. The activated carbon fiber cloth used in the following examples is an activated carbon fiber cloth (product number: ACC5092-25, area density: 100 to 130 g/m², thickness: about 0.5 mm, and iodine adsorption amount: 1850~2100 mg/g) manufactured by Nippon Kynol Inc. unless otherwise described. This activated carbon fiber cloth has a specific surface area of at least about 2000 m²/g.

### [Example 1]

In Example 1, an example is described in which ions were removed from tap water according to the present invention.

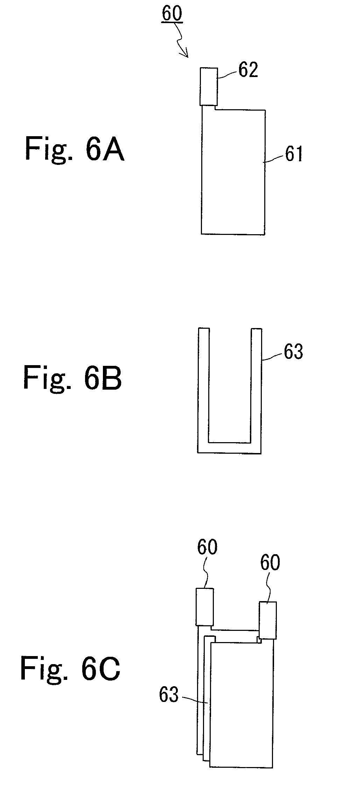

As shown in FIG. 6A, an electrode (ion-adsorbing electrode) 60 was produced with a collector 62 attached to the activated carbon fiber cloth 61 with a size of about 3 cm x 5 cm. The collector 62 was produced by coating titanium with platinum. Furthermore, a spacer 63 was prepared that had a shape shown in FIG. 6B and was formed of acrylic resin.

Subsequently, two electrodes 60 were disposed on both sides of a container with an internal volume of 60 ml. At this time, the spacer 63 was disposed between the two electrodes 60 as shown in FIG. 6C. The distance between the two electrodes was about 17 mm. Then 40 ml of tap water with a conductivity of 150 µS/cm was placed in the container.

Thereafter, a 60-mA electric current was applied between the two electrodes 60 for one, three, and five minutes and thereby the changes in conductivity and pH were measured. With application of the electric current for one to five minutes, ions contained in the tap water were adsorbed by the electrodes and the conductivity of the tap water was reduced to 140 µS/cm (one minute), 120 µS/cm(three minutes), and 105 µS/cm(five minutes). On the other hand, the pH hardly changed even after the electric current was applied for one to five minutes.

Next, two electrodes 60 and one separator were disposed in a container with an internal volume of 45 ml in the same manner as described above. Then 28 ml of tap water with a conductivity of 150 µS/cm was placed in the container. Thereafter, a 10-mA electric current was applied between the electrodes and the change in conductivity of the tap water was measured. In this case, the distance between the two electrodes was about 13 mm. The decrease in conductivity resulted from the decrease in ion concentration of the tap water. The pH of the tap water also was measured after the treatment. Table 1 indicates the measurement results.

**[Table 1]**

| Current value [mA] | Current application time [min] | Electrical quantity [C] | Change in conductivity [µS/cm] Initial→Final | pH |
|---|---|---|---|---|
| 10 | 10 | 6 | 150 → 136 | 7.3 |
| 10 | 15 | 9 | 150 → 123 | 6.6 |
| 10 | 20 | 12 | 150 → 121 | 4.1 |
| 10 | 30 | 18 | 150 → 87 | 5.7 |
| 10 | 60 | 36 | 150 → 19 | 7.1 |

As shown in Table 1, when an electric current was applied, ions were removed while the pH did not change in the initial stage. However, with an increase in amount of ions thus removed, the pH was lowered considerably and thereby water was acidized. When the electric current further was applied continuously, the conductivity decreased considerably and pH returned to about 7.

In this example, the anode and the cathode are identical to each other in ion adsorption capacity (ion adsorption possible amount). Therefore, when the electric current is applied continuously, the electric potential of the anode reaches first the electric potential at which an oxygen gas is generated. As a result, an oxygen gas is generated at the anode and thereby the concentration of the hydrogen ion contained in the water increases to lower the pH of the water. When the electric current further is applied continuously, the pH increases. Conceivably this is because of hydrogen gas generated at the cathode in addition to oxygen gas generated at the anode.

### [Example 2]

Three ion-adsorbing electrodes that were similar to those used in Example 1 were prepared and were disposed in parallel to one another on both sides and at the center of a container with an internal volume of 45 ml. A spacer that was similar to that used in Example 1 was disposed between electrodes. The distance between two electrodes was about 6 mm. Then 29 ml of tap water was placed in the container. Subsequently, the following experiments were carried out.

In Experiment 1, a voltage was applied for five minutes so that two electrodes located on both sides served as anodes and the one electrode located at the center served as a cathode. Thus ions contained in the tap water were removed. The voltage was applied so that the electric current that flowed between the anode and cathode was 20 mA.

Next, in Experiment 2, the electrodes that had adsorbed ions in Experiment 1 were allowed to release the ions. In this case, a voltage was applied for five minutes so that two electrodes located on both sides served as cathodes and the one electrode located at the center served as an anode. The voltage was applied so that the electric current that flowed between the anode and cathode was 20 mA.

In Experiment 3, the same experiment as in Experiment 1 was carried out except for a change in the period of time for which the electric current was applied. Furthermore, in Experiments 4 to 6, the same experiments as in Experiment 1 were carried out except for changes in the electric current applied between electrodes and the current application time.

Table 2 indicates the change in conductivity of the tap water during the treatments carried out in Experiments 1 to 6 and the pH of the tap water obtained after the treatments. Furthermore, Table 2 also indicates the change in voltage applied in Experiments 1 and 4.

**[Table 2]**

| Experiments | Current value [mA] | Current application time [min] | Electrical quantity [C] | Change in voltage [V] Initial→Final | Change in conductivity [µS/cm] Initial→Final | pH |
|---|---|---|---|---|---|---|
| 1 | 20 | 5 | 6 | 4.6 → 12.5 | 145 → 59 | 7.0 |
| 2 | 20 | 5 | 6 | | 59 → 150 | 7.1 |
| 3 | 20 | 10 | 12 | | 145 → 30 | 6.9 |
| 4 | 100 | 2 | 12 | 25 → 60 | 172 → 67 | 7.2 |
| 5 | 200 | 1 | 12 | | 172 → 75 | 6.9 |
| 6 | 200 | 2 | 24 | | 172 → 50 | 6.5 |

In Example 2, unlike Example 1, the ion adsorption capacity of the anode was twice the ion adsorption capacity of the cathode. As a result, changes in the pH through out the treatments hardly were observed.

In Experiment 1, removal of the ions resulted in a decrease in conductivity of the tap water. In Experiment 2, release of the ions allowed the conductivity of the tap water to become almost equal to that obtained initially.

In Experiment 4 where the current value was high, the final voltage applied was as high as 60 volts, but gas was not generated so much. Similarly in Experiments 5 and 6, gas was not generated so much.

In Experiments 4 to 6 where the current values were high, the ion removal efficiency, that is, the amount of removed ions with respect to the electrical quantity, was reduced. Conceivably, this is because the effect of the resistance of the activated carbon fiber cloth increases, and thereby the amount of adsorbed ions becomes uneven in the electrodes. In order to prevent the decrease in efficiency as described above, it is effective to gradually reduce the electric current to be applied between the electrodes or to stop voltage application for a certain period of time.

### [Example 3]

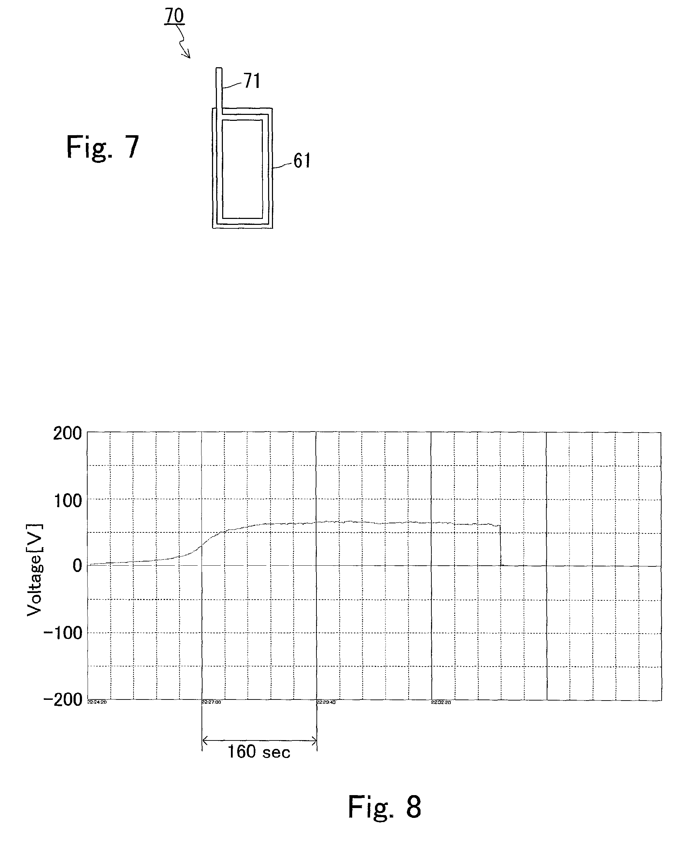

In Example 3, as shown in FIG. 7, an electrode 70 was produced, with a wiring 71 being disposed to be in contact with the surface of an activated carbon fiber cloth 61 (with a size of 3 cm x 5 cm). The wiring used herein was a titanium wire whose surface was coated with platinum. Furthermore, separators formed of polyethylene were prepared.

An apparatus was configured that was similar to the apparatus used in Example 2 except that electrodes 70 shown in FIG. 7 were used instead of the electrodes 60 shown in FIG. 6 and the separators was used instead of the spacers. Then 30 ml of tap water or 30 ml of NaCl aqueous solution (with a conductivity of 588 µS/cm) was placed in the container (with an internal volume of 45 ml) of the apparatus. Thus ion removal experiments were carried out.

Experiments 7 to 11 were carried out using different current values to be applied between an anode and a cathode as well as different current application times. Furthermore, two electrode groups, each of which was composed of anode / separator / cathode / separator / anode, were disposed in the container, and then Experiment 12 for ion removal was carried out. Table 3 indicates a change in conductivity of the liquid through the ion removal step and the final pH value.

**[Table 3]**

| Experiments | Liquid | Current value [mA] | Current application time [min] | Electrical quantity [C] | Change in conductivity [µS/cm] Initial→Final | pH |
|---|---|---|---|---|---|---|
| 7 | Tap water | 5 | 20 | 6 | 181 → 46 | 7.1 |
| 8 | NaCl aqueous solution | 5 | 30 | 9 | 588 → 397 | 10.0 |
| 9 | NaCl aqueous solution | 10 | 30 | 18 | 588 → 250 | 10.1 |
| 10 | NaCl aqueous solution | 50 | 10 | 30 | 588 → 180 | 7.1 |
| 11 | NaCl aqueous solution | 25 | 20 | 30 | 588 → 155 | 6.9 |
| 12 | NaCl aqueous solution | 25 | 20 | 30 | 588 → 150 | 7.2 |

With the wirings formed on the electrodes, the ion removal efficiency was improved. Furthermore, in Example 3, since the ion adsorption capacity of the anode is twice the ion adsorption capacity of the cathode, hydrogen gas is generated at the cathode before oxygen gas is generated at the anode when an electric current is applied continuously. Hydroxide ion was released into the liquid as the hydrogen gas was generated at the cathode, and therefore the pH of the liquid increased as the treatment proceeded. However, when application of the electric current was continued, the pH was decreased and thereby the liquid was almost neutralized. Conceivably, the reason why the pH becomes neutral is because oxygen gas is generated at the anode in addition to the hydrogen gas generated at the cathode when the electric current is applied continuously.

The direction in which the pH changed through the treatment in Example 3 was opposite to that in which the pH changed through the treatment in Example 1. Accordingly, it can be considered that the optimal ratio between the ion adsorption capacity of the anode and that of the cathode lies between the ratio employed in Example 1 and that employed in Example 3. Furthermore, the results of Examples 1 and 3 show that the electrical potential of the electrodes can be controlled by utilizing the decomposition reaction of water. Therefore, when the ratio between the ion adsorption capacity of the anode and that of the cathode is set at a value near the optimal value, even if the balance in amount of cations and anions that have been adsorbed was disturbed, the imbalance can be cancelled through decomposition of water at the anode and/or cathode.

Furthermore, in Experiment 12 in which the amount of the activated carbon fiber cloth was doubled, even with the same electrical quantity being applied, no water electrolysis occurred and the pH did not change.

When oxygen gas was generated at the anode using the electrodes of Example 3 with wirings, it was generated from the surface of the wiring first. When the electric potential of the anode was increased further, oxygen gas also was generated from the surface of the activated carbon fiber cloth. Thus, it is conceivable that platinum has a lower oxygen overvoltage than that of the activated carbon. Similarly, it is conceivable that platinum has a lower hydrogen overvoltage than that of the activated carbon.

### [Comparative Example]

First, six electrodes with wirings described in Example 3 were prepared. Three each of spacers described in Example 1 and separators used in Example 3 were prepared. These electrodes, spacers, and separators were placed in a container (with an internal volume of 45 ml) so as to be disposed as anode / separator / spacer / cathode / cathode / spacer / separator / anode / anode / separator / spacer / cathode. The distance between adjacent anode and cathode was about 4 mm.

Next, about 30 ml of NaCl aqueous solution with a concentration of about 0.0084 mol/liter was placed in this container, and then the ion removal experiment was carried out. The voltage to be applied between the electrodes was fixed at 1 V

In the experiment, every time the value of the current that flowed between the electrodes was lowered by one order, the voltage application was stopped, and then the voltage (rest potential) between the anode and the cathode as well as the conductivity and pH of the aqueous solution were measured. Furthermore, finally treatment was carried out for 130 minutes, and then the rest potential, conductivity, and pH were measured. The measurement results are indicated in Table 4.

**[Table 4]**

| Applied voltage [V] | Integrated application time [min] | Current value [mA] Initial→Final | Rest potential [V] | Change in conductivity [µS/cm] Initial→Final | pH |
|---|---|---|---|---|---|
| 1 | 16 | 95 → 9.5 | 0.800 | 947 → 538 | 9.6 |
| 1 | 39 | 45 → 4.5 | 0.890 | → 380 | 9.7 |
| 1 | 72 | 29 → 2.9 | 0.915 | → 327 | 9.8 |
| 1 | 108 | 26 → 2.6 | 0.924 | → 305 | 9.6 |
| 1 | 238 | 22 → 1.2 | 0.953 | → 215 | 7.5 |

As indicated in Table 4, the pH of the aqueous solution increased with the start of the treatment. Furthermore, the conductivity was decreased as the treatment proceeded, and thereby it was proved that ions were removed even when the applied voltage was 1 volt. However, the rest potential increases as the ions are adsorbed by the electrodes. That is, even when the voltage applied between the electrodes is 1 volt, the voltage (electric field) to be applied to the aqueous solution between the electrodes is a value obtained by subtracting the rest potential from 1 volt. For example, after 16 minutes of treatment, the rest potential is 0.8 volt and the voltage applied to the aqueous solution is 0.2 volt. Therefore, the ion absorption capacity of the electrodes deteriorates and therefore the ion removal efficiency degrades. Thus even when a voltage that is equal to or lower than the water decomposition voltage is applied between the electrodes, the treatment cannot be carried out efficiently.

### [Example 4]

Using the same apparatus as that used in Comparative Example described above, an ion removal experiment was carried out with a voltage being applied between the electrodes by the constant current method. Specifically, a voltage was applied so that the electric current that flowed between the anode and the cathode was 200 mA. In Example 4, a NaCl aqueous solution with a conductivity of 800 µS/cm was treated.

In Experiment 13, a voltage was applied continuously until the conductivity of the aqueous solution reached around 100 µS/cm. In Experiment 14, the voltage rise rate was monitored, and the application of the voltage was stopped at the time when the voltage rise rate slightly slowed down. In Experiment 15, after stopping the voltage application in Experiment 14, a voltage was applied again until the conductivity of the aqueous solution reached around 100 µS/cm. In Experiments 13 to 15, the change in voltage, the change in conductivity of the aqueous solution, and the pH of the aqueous solution were measured. The measurement results are indicated in Table 5.

**[Table 5]**

| Experi ment | Current value [mA] | Current application time [min] | Electrical quantity [C] | Applied voltage [V] Initial→Final | Change in conductivity [µS/cm] Initial→Final | pH |
|---|---|---|---|---|---|---|
| 13 | 200 | 9.5 | 114 | 2.5 → 60 | 800 → 106 | 6.0 |
| 14 | 200 | 3.5 | 42 | 2.5 → 70 | 800 → 280 | 6.8 |
| 15 | 200 | 1.7 | 20 | 4.4 → 83 | 280 → 105 | 6.4 |

FIG. 8 shows the change in the voltage applied in Experiment 13. The voltage rose from 2.5 V (initial) to 67 volts and then fell to 60 volts (final). The horizontal axis shown in FIG. 8 indicates 32 seconds per one scale. The rise of voltage started to become slow after about 200 seconds from the start of voltage application. Conceivably, this is because the water decomposition reaction started.

Then, in Experiment 14, voltage application was stopped after 210 seconds (3.5 minutes) from the start of voltage application. When a rough estimate is made based on the conductivity, about 65% of the sodium ions and chlorine ions had been removed at this point of time.

During about 10 minutes that are required for the measurement, with the voltage application being stopped, the ions adsorbed by the activated carbon fiber cloth move and thereby the distribution of the ions is equalized. As a result, the electric potentials of the electrodes decrease, which allows a 200-mA electric current to flow even at a low applied voltage. After completion of the measurements in Experiment 14, when voltage application in Experiment 15 was started, the applied voltage had been decreased to 4.4V In Experiment 15, the applied voltage rose to 83 V about 1.7 minutes after the start of voltage application, and then the voltage rise started to slow down. With voltage application for 1.7 minutes, the conductivity decreased to about 100 µS/cm. Although the total voltage application time in Experiments 14 and 15 was 5.2 minutes and thus was shorter than that (9.5 minutes) required in Experiment 13, ion removal was achieved to the same degree. Accordingly, when the treatment is carried out under conditions that do not cause water electrolysis, ions can be removed efficiently even at a high electric current.

### [Example 5]

In the experiments of Example 5, the electrode 70 and the separator described in Example 3 were used. The activated carbon contained in one electrode 70 was about 0.17 g.

Two electrodes were disposed on both sides of the container with an internal volume of 45 ml, and a separator was disposed between the two electrodes. In this container, 30 ml of NaCl aqueous solution (with a conductivity of 1117 µS/cm and a pH of 6.32) with a concentration of 0.01 mol/liter was placed and then the ion removal experiment was carried out.

In Experiment 16, a voltage was applied so as to result in a current value of 200 mA. After the voltage was applied for five minutes, measurements were carried out. Then the aqueous solution that had been subjected to the measurement further was treated in Experiment 17. In Experiment 17, a voltage was applied so as to result in a current value of 100 mA.

In Experiment 18, a voltage was applied so as to result in a current value of 65 mA. After the voltage was applied for 15 minutes, the measurement was carried out. The aqueous solution that had been subjected to the measurement further was treated in Experiment 19. In Experiment 19, a voltage was applied so as to result in a current value of 35 mA. The measurement results are indicated in Table 6.

**[Table 6]**

| Experiment | Current value [mA] | Current application time [min] | Electrical quantity [C] | Applied voltage [V] Initial→ Final | Change in conductivity [µS/cm] Initial→ Final | Change in concentration [mol/liter] Initial→Final | pH |
|---|---|---|---|---|---|---|---|
| 16 | 200 | 5 | 60 | 20 → 55 | 1117→435 | 0.01→0.0037 | 3.7 |
| 17 | 100 | 10 | 60 | 20 → 60 | →211 | →0.0018 | 6.1 |
| 18 | 65 | 15 | 59 | 10 → 30 | 1117→318 | 0.01→0.0027 | 4.1 |
| 19 | 35 | 30 | 63 | 10 → 35 | →162 | →0.0014 | 6.2 |

In Example 5, an aqueous solution was treated that had a high ion concentration and a conductivity that was at least five times the conductivity of the tap water. In Experiment 16, the treatment was carried out at a current value that was about three times the current value employed in Experiment 18. However, since this treatment was carried out with available capacity being left in the ion adsorption capacity, the change in conductivity in Experiment 16 was fairly comparable to that in Experiment 18. Furthermore, after Experiment 16, Experiment 17 was carried out at a low current value, and thereby ions were removed until the ion level of tap water was achieved as in Experiment 19. As indicated in Experiments 16 to 19, ions were removed at the same electrical quantity in a short period of time, with a high current value used initially, which was then lowered as the ions were removed.

### [Example 6]

First, two apparatuses were prepared that were identical to that used in the comparative example. In the container (with an internal volume of 45 ml) of one apparatus, about 30 ml of tap water with a conductivity of 170 µS/cm was placed, and then the ion removal experiment was carried out. First, the treatment was carried out, with the electric current and current application time being changed in three levels, and thereby the conductivity was reduced to about 15 µS/cm. Table 7 indicates the change in applied voltage during the treatment, the change in conductivity due to the treatment, and the pH obtained after the treatment.

**[Table 7]**

| Current value [mA] | Current application time [min] | Applied voltage [V] Initial→Final | Change in conductivity [µS/cm] Initial→Final | pH |
|---|---|---|---|---|
| 200 | 3 | 10 → 120 | 170 → 61.0 | 6.6 |
| 50 | 5 | 10 → 50 | → 29.6 | 6.6 |
| 30 | 15 | 10 → 40 | → 14.5 | 6.5 |

Next, the water that had been treated was transferred into a new apparatus, and the ion removal treatment was carried out again. Table 8 indicates the change in conductivity due to this treatment and the pH obtained after the treatment.

**[Table 8]**

| Current value [mA] | Current application time [min] | Change in conductivity [µS/cm] Initial→Final | pH |
|---|---|---|---|
| 20 | 20 | 15 → 2.1 | 6.4 |

In Example 6, it was possible to decrease the conductivity of tap water to that of pure water.

### [Example 7]

In Example 7, electrodes were produced using, as the activated carbon fiber cloth, two types of activated carbon fiber clothes, specifically, an activated carbon fiber cloth ACC5092-25 (described above) and ACC5092-10 (with an area density of 200 g/m², a thickness of about 0.6 mm, and a specific surface area of 2000 m²/g) manufactured by Nippon Kynol Inc. A platinum wiring was placed as a collector on the surface of each activated carbon fiber cloth.

Using the above-mentioned two types of electrodes, the cyclic voltammetry was carried out. From the result thereof, the electrical quantity that was required for a rest potential (RP) to reach an electric potential at which water was electrolyzed was determined with respect to each of the anode and the cathode. Furthermore, from the electrical quantity, the amount of ions to be adsorbed by the electrodes also was estimated. Table 9 indicates the evaluation results. In Table 9, the electrical quantity and the amount of adsorbed ions each are indicated as a value per 1 cm² of activated carbon fiber cloth. Furthermore, the potential window (the region where water is not electrolyzed) of the aqueous solution was 1.49 volts in the case of Pt electrode - Pt electrode and 1.95 volts in the case of activated carbon electrode - activated carbon electrode.

**[Table 9]**

| Activated carbon cloth | Electrode | Electrical quantity required from RP to electrolysis [A·sec/cm²] | Amount of ions adsorbed during RP to electrolysis [mol/cm²] |
|---|---|---|---|
| ACC5092-25 | Anode | 2.59 | 2.68 x 10⁻⁵ |
| | Cathode | 3.50 | 3.62 x 10⁻⁵ |
| ACC5092-10 | Anode | 3.37 | 3.49 x 10⁻⁵ |
| | Cathode | 4.39 | 4.55 x 10⁻⁵ |

As indicated in Table 9, the anode and the cathode were different from each other in electrical quantity required during a period from the state where ions had not been adsorbed until water electrolysis occurred. When the activated carbon fiber cloth ACC5092-25 was used, the electrical quantity was anode: cathode = 1 : 1.35. When the activated carbon fiber cloth ACC5092-10 was used, the electrical quantity was anode: cathode = 1 : 1.30.

From the results indicated in Table 9, it was proved that the amount of the activated carbon used in the anode was preferably about 1.35 times the amount of the activated carbon used in the cathode when the activated carbon fiber cloth was used for the ion adsorption material and Pt was present on the surface of the collector. With such a configuration, when substantially the same amount of ions are adsorbed by the anode and the cathode, the both electrodes reach the electric potential of gas generation.

The ratio between the ion adsorption capacity of the anode and that of the cathode varies according to the materials of the ion adsorption material and the collector. However, generally, it is preferable that the capacity of the anode be increased.

### [Example 8]

First, an apparatus was prepared that was identical to that used in the comparative example. Tap water with a conductivity of 167 µS/cm was placed in the container of the apparatus. A voltage was applied thereto for five minutes to allow the ions contained in the tap water to be adsorbed by the electrodes. The voltage was applied so that 20 mA of electric current flowed between the electrodes. After the voltage was applied for five minutes, the tap water contained in the container was replaced. The same operation was repeated again and thereby the ions contained in the tap water were allowed to be adsorbed by the electrodes. This ion adsorption step was carried out five times continuously with the same electrodes, and thereby ions were accumulated in the electrodes.

Next, 31 ml of fresh tap water was placed in the container. Then two electrodes were short-circuited, so that the ions that had been adsorbed by the electrodes were released into the tap water. With this ion release step, the ion concentration of the tap water was increased.

Table 10 shows the change in applied voltage in each step as well as the conductivity and pH of the aqueous solution after the treatment.

**[Table 10]**

| | Amount of tap water [ml] | Applied voltage [V] Initial→Final | Conductivity [µS/cm] | pH |
|---|---|---|---|---|
| First ion adsorption step | 31 | 0.8 → 4.5 | 112 | 6.9 |
| Second ion adsorption step | 33 | 0.9 → 6.0 | 94 | 7.5 |
| Third ion adsorption step | 33 | 1.0 → 7.5 | 83 | 7.5 |
| Fourth ion adsorption step | 32 | 1.0 → 6.3 | 89 | 7.4 |
| Fifth ion adsorption step | 33 | 1.0 → 6.1 | 92 | 7.4 |
| Ion release step | 31 | -0.5 → 0 | 496 | 7.4 |

As indicated in Table 10, the ion release step allowed the salt concentration of the aqueous solution to be increased.

### [Example 9]

In Example 9, an example is described in which ions contained in a nonaqueous electrolyte were removed.

First, 18.5 ml of nonaqueous electrolyte was placed in a container (with an internal volume of 27.6 ml) made of vinyl chloride resin. Propylene carbonate was used for the solvent of the nonaqueous electrolyte. Triethylmethylammonium tetrafluoroborate (TEMA·BF₄) was used for the solute. The initial concentration of the solution was 0.0294 mol/liter.

Next, one anode electrode and one cathode electrode were immersed in the nonaqueous electrolyte. The two electrodes were identical to each other, and the electrode shown in FIG. 7 was used for them. The distance between the two electrodes was 4 mm.

Next, while the conductivity of the nonaqueous electrolyte was being measured, a constant voltage of 2.4 volts was applied between the two electrodes for 280 minutes. As a result, the conductivity of the nonaqueous electrolyte was changed from 750 µS/cm (initial) to 164 µS/cm (final). Conceivably, this change resulted from the removal of the cations (TEMA) and anions (BF₄-) contained in the nonaqueous electrolyte.

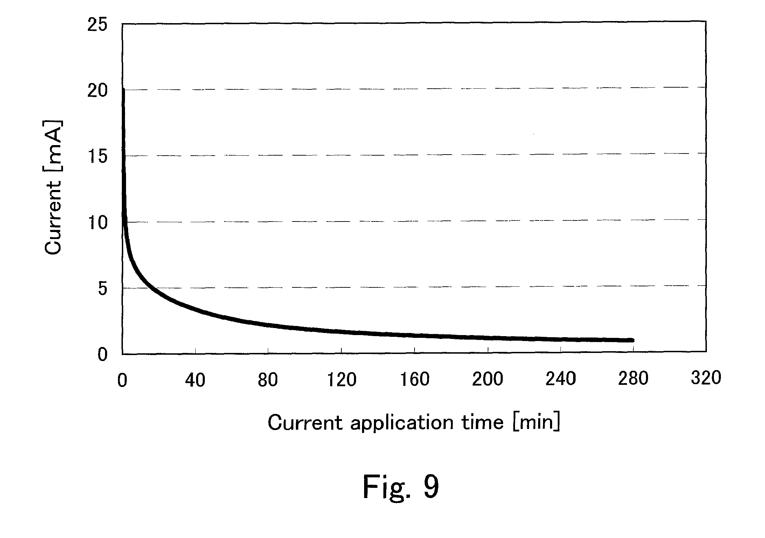

The relationship between the value of current that flows between the electrodes and the current application time is shown in FIG. 9. As shown in FIG. 9, with an elapse of current application time, ions are removed and thereby the solution resistance increases, which results in a decrease in current value.

### [Example 10]

In Example 10, another example is described in which ions contained in a nonaqueous electrolyte were removed. In Example 10, the same experiment as in Example 9 was carried out except for the initial concentration of the nonaqueous electrolyte and the electric current application method.

In Example 10, the initial concentration of the nonaqueous electrolyte was 0.0036 mol/liter. Then 20 mA of constant current was applied for seven minutes. As a result, the conductivity of the solution changed from 137.5 µS/cm (initial) to 42.9 µS/cm (final).

### [Example 11]

In Example 11, another example is described, in which ions contained in a nonaqueous electrolyte were removed. In Example 11, the same experiment as in Example 9 was carried out except for the initial concentration of the nonaqueous electrolyte and the electric current application method.

In Example 11, the initial concentration of the nonaqueous electrolyte was 0.0044 mol/liter. Then a constant current of 10 mA was applied for 27 minutes. As a result, the conductivity of the solution changed from 140.3 µS/cm (initial) to 8.0 µS/cm (final).

In Examples 9 to 11, there is a possibility that the conductivity had saturated during the current application time. Therefore there is a possibility that the current application time required to reach the final conductivity is shorter than those of the examples.

### Industrial Applicability

The present invention is applicable to a method of controlling the ion concentration of a liquid and an apparatus of controlling the ion concentration of a liquid. Furthermore, the present invention also is applicable to method and apparatus of controlling the ion concentration and pH of a liquid.

## Claims

1. A method of controlling an ion concentration,
wherein the method comprises:
(i) applying a voltage between a first ion-adsorbing electrode containing a first electrically conductive material capable of adsorbing an ion and a second ion-adsorbing electrode containing a second electrically conductive material capable of adsorbing an ion so that the first ion-adsorbing electrode serves as an anode, with the first ion-adsorbing electrode and the second ion-adsorbing electrode being immersed in a solution containing at least one type of ion (L) other than hydrogen ion and hydroxide ion, to allow the first ion-adsorbing electrode to adsorb an anion contained in the solution and to allow the second ion-adsorbing electrode to adsorb a cation contained in the solution, in a container,
in the step (i), the solution is treated by a batch method, and
the voltage is higher than a voltage that causes electrolysis of a solvent of the solution, assuming that no voltage drop is caused by the solution.

2. The method of controlling an ion concentration according to claim 1,
wherein after the step (i), the method comprising:
(ii) replacing the solution contained in the container by another liquid and applying a voltage between the first ion-adsorbing electrode and the second ion-adsorbing electrode so that the first ion-adsorbing electrode serves as a cathode, which allows the anion adsorbed by the first ion-adsorbing electrode and the cation adsorbed by the second ion-adsorbing electrode to be released into the liquid.

3. The method of controlling an ion concentration according to claim 1, wherein the solution is an aqueous solution, and
the voltage is higher than 2 volts.

4. The method of controlling an ion concentration according to claim 1, wherein the solution is a nonaqueous solution.

5. The method of controlling an ion concentration according to claim 2, wherein the step (i) and the step (ii) are repeated a plurality of times.

6. The method of controlling an ion concentration according to claim 1, wherein the first and second electrically conductive materials each have a specific surface area of 900 m²/g or more.

7. The method of controlling an ion concentration according to claim 1, wherein the first and second electrically conductive materials contain activated carbon.

8. The method of controlling an ion concentration according to claim 1, wherein the first ion-adsorbing electrode includes a first wiring that is in contact with the first electrically conductive material, and the second ion-adsorbing electrode includes a second wiring that is in contact with the second electrically conductive material.

9. The method of controlling an ion concentration according to claim 8, wherein the first wiring has a metal present at a surface thereof, with the metal having a lower oxygen overvoltage than that of activated carbon, and the second wiring has a metal present at a surface thereof, with the metal having a lower hydrogen overvoltage than that of activated carbon.

10. An ion concentration control apparatus, comprising a power supply for applying a voltage, a container capable of introducing and discharging a liquid, and first and second ion-adsorbing electrodes that can be disposed in the container,
wherein the first ion-adsorbing electrode contains a first electrically conductive material capable of adsorbing an ion,
the second ion-adsorbing electrode contains a second electrically conductive material capable of adsorbing an ion,
the apparatus carries out (i) applying a voltage between the first ion-adsorbing electrode and the second ion-adsorbing electrode so that the first ion-adsorbing electrode serves as an anode, with the first and second ion-adsorbing electrodes being immersed in a solution containing at least one type of ion (L) other than hydrogen ion and hydroxide ion, which allows the first ion-adsorbing electrode to adsorb an anion contained in the solution and to allow the second ion-adsorbing electrode to adsorb a cation contained in the solution, in the container,
in the step (i), the solution is treated by a batch method, and
the voltage is higher than a voltage that causes electrolysis of a solvent of the solution, assuming that no voltage drop is caused by the solution.

11. The ion concentration control apparatus according to claim 10, further comprising a counter electrode that can be disposed in the container.

12. The ion concentration control apparatus according to claim 10,
wherein after the step (i), the apparatus carries out:
(ii) replacing the solution contained in the container by another liquid and applying a voltage between the first ion-adsorbing electrode and the second ion-adsorbing electrode so that the first ion-adsorbing electrode serves as a cathode, which allows the anion adsorbed by the first ion-adsorbing electrode and the cation adsorbed by the second ion-adsorbing electrode to be released into the liquid.

13. The ion concentration control apparatus according to claim 10, wherein the solution is an aqueous solution, and
the voltage is higher than 2 volts.

14. The ion concentration control apparatus according to claim 10, wherein the solution is a nonaqueous solution.

15. The ion concentration control apparatus according to claim 10, wherein the first and second electrically conductive materials each have a specific surface area of 900 m²/g or more.

16. The ion concentration control apparatus according to claim 10, wherein the first and second electrically conductive materials contain activated carbon.

17. The ion concentration control apparatus according to claim 10, wherein the first ion-adsorbing electrode includes a first wiring that is in contact with the first electrically conductive material, and the second ion-adsorbing electrode includes a second wiring that is in contact with the second electrically conductive material.

18. The ion concentration control apparatus according to claim 17, wherein the first wiring has a metal present at a surface thereof, with the metal having a lower oxygen overvoltage than that of activated carbon, and the second wiring has a metal present at a surface thereof, with the metal having a lower hydrogen overvoltage than that of activated carbon.

19. The ion concentration control apparatus according to claim 17, wherein the first and second wirings have platinum at their surfaces.
